# EUROPÄISCHE PATENTSCHRIFT

(11) **EP 1 064 764 B1**
(45) Veröffentlichungstag und Bekanntmachung des Hinweises auf die Patenterteilung: **14.12.2005**
(21) Anmeldenummer: 99913271.5
(22) Anmeldetag: 17.03.1999
(51) Int. Cl.: H04L 12/66

(54) **VORRICHTUNG UND VERFAHREN ZUR BEARBEITUNG VON KOMMUNIKATIONSWÜNSCHEN IN HETEROGENEN KOMMUNIKATIONSNETZEN**
METHOD AND DEVICE FOR PROCESSING COMMUNICATION REQUESTS IN HETEROGENEOUS COMMUNICATION NETWORKS
DISPOSITIF ET PROCEDE PERMETTANT DE TRAITER DES DEMANDES DE COMMUNICATION DANS DES RESEAUX DE COMMUNICATION HETEROGENES

(30) Priorität: 17.03.1998 EP 98104826; 07.07.1998 EP 98112594
(43) Veröffentlichungstag der Anmeldung: 03.01.2001
(73) Patentinhaber: Kübler, Hans, Dr., 82205 Gilching (DE)
(72) Erfinder: REITENSPIESS, Manfred, D-85635 Siegertsbrunn (DE); KUEFFE, Hans, D-81739 München (DE); KONRAD, Burkhard, D-85774 Unterföhring (DE); KÜBLER, Hans, D-82205 Gilching (DE)
(86) Internationale Anmeldenummer: PCT/EP1999/001780
(87) Internationale Veröffentlichungsnummer: WO 1999/048258

(56) Entgegenhaltungen:
- US-A- 5 610 910
- ROUSSEL A -M: "A THEORY OF EVOLUTION FOR ROUTERS" DATA COMMUNICATIONS, Bd. 23, Nr. 6, 1. April 1994 (1994-04-01), Seite 64G/64H XP000434637 ISSN: 0363-6399
- PHILLIPS B: "A CARD FOR ALL-IN-ONE WAN ACCESS" DATA COMMUNICATIONS, Bd. 23, Nr. 1, 1. Januar 1994 (1994-01-01), Seite 70/71 XP000429101 ISSN: 0363-6399
- SCHOEN U ET AL: "CONVERGENCE BETWEEN PUBLIC SWITCHING AND THE INTERNET" IEEE COMMUNICATIONS MAGAZINE, Bd. 36, Nr. 1, 1. Januar 1988 (1988-01-01), Seiten 50-58, 63 - 65, XP000739153 ISSN: 0163-6804
- BIRENBAUM E: "MULTIPURPOSE, MULTIPROTOCOL BRANCH-OFFICE BOX" DATA COMMUNICATIONS, Bd. 23, Nr. 9, 1. Juni 1994 (1994-06-01), Seite 37/38 XP000448937 ISSN: 0363-6399

## Beschreibung

Die Erfindung betrifft Kommunikationswünsche und Telekommunikationsdienste in heterogenen Netzen, also Telekommunikationsnetze die sich in technischer (physikalischer) Weise und in den darauf verwendeten Kommunikationsprotokollen unterscheiden. Der Begriff Kommunikationswünsche beschreibt alle Arten von Verbindungsaufbauversuchen über leitungsvermittelte Netze und Versendung von Datenpaketen in paketvermittelnden Netzen. Unter Telekommunikationsdiensten versteht man sowohl die einfache Übertragung von Kommunikationswünschen der verschiedenen Medien (Sprache, Text, Bilder, Video...), als auch sogenannte Mehrwertdienste, die in beliebiger Weise die Art der Benutzung der Netze vereinfachen und erweitern.

Die Erläuterung der im Folgenden benutzten Abkürzungen befindet sich im Abkürzungsverzeichnis am Ende der Beschreibung.

Die Konvergenz der paketvermittelten und der leitungsvermittelten Kommunikationsnetze, sowie der dabei verwendeten Technologien verlangen neue Wege der Einführung von Telekommunikations-Diensten und des Zugriffs von verschiedenen Geräten in diesen heterogenen Netzwelten:
- In leitungsvermittelten Kommunikationsnetzen werden Dienste zentral zur Verfügung gestellt, in oder in Verbindung mit den Vermittlungsstellen. Die Dienste sind oftmals stark standardisiert, zum Beispiel von den Standardisierungsgremien der ITU und ETSI. Sie können meist nur durch den Netzbetreiber oder -eigentümer und in Koordination mit den Operatoren der Dienstanbieter geändert werden.
- In paketvermittelten Kommunikationsnetzen sind Dienste stark im gesamten Netz verteilt. Das Netz dient dabei als Transportmittel ohne spezifisches Wissen über den Inhalt der transportierten Datenpakete. Standards werden ad hoc von Firmen oder Interessengruppen, national und international entwickelt (z. B. IETF und RFC für das Internet). Dienste können installiert und betrieben werden, solange sie bestimmten Regeln, etwa für den sicheren Transport von digitalen Daten, folgen.

Wegen der den beiden Vermittlungskonzepten innewohnenden Unterschiede ist die transparente Verfügbarmachung von Diensten unabhängig von Medium, Netztyp, Betreiber und Betriebsart nicht möglich. Dies verhindert die Einführung von neuen Telekommunikationsdiensten sowohl lokal als auch global.

Der Kunde entscheidet heute bereits aufgrund des von ihm benutzten Kommunikationsgerätes, welche Art von Netz er verwenden will. Wenn von einem Netztyp zu einem anderen eine Protokoll- oder Medien-Umsetzung erforderlich ist, so werden in derzeitigen Lösungen fest zugeordnete Übergangspunkte (sogenannte Gateways) eingerichtet, die zwischen bereits existierenden Telekommunikationsnetzen eingesetzt werden. Diese sind auf die jeweiligen Netztypen beschränkt und daher nicht flexibel einsetzbar.
Bei öffentlichen Kommunikationsnetzen sind diese Lösungen oftmals standardkonform. Eine Möglichkeit ist die Definition von Zugangspunkten, welche sich als Client und Server verhalten und dabei spezifische Protokolle, wie H.323 und H.320 für Audio- und Video-Kommunikation verwenden.

Dadurch wird dem Netzbenutzer die Möglichkeit genommen, die für seine Zwecke günstigste Kombination von Netzen zu benutzen. Weiterhin wird der Netzbetreiber daran gehindert, für eine vom Benutzer gewünschte Mischung von Diensten die aus seiner Sicht optimale Kombination von Netzen zu verwenden. Dabei müssen unterschiedliche Ziele berücksichtigt werden, zum Beispiel führt der günstigste Weg (least cost routing) meistens nicht zu einer gleichmäßigen Auslastung der Netzresourcen (load balance). US 5 610 910 beschreibt Lösungen, wie der Verkehr von Endgeräten auf unterschiedliche Netze gebracht werden kann.

Aufgabe der Erfindung ist es, unterschiedliche Arten von Kommunikationswünschen über heterogene Netze zu übertragen. Eine weitere Aufgabe der Erfindung ist es, Telekommunikationsdienste transparent über heterogene Netze anbieten zu können.

Diese Aufgabe wird gelöst durch eine Vorrichtung gemäß Patentanspruch 1.

Die erfindungsgemäße Vorrichtung erfüllt folgende Funktionen, die erfindungsgemäß in einem Standard Computer beheimatet sein können:
- Versorgung mit Diensten, d. h. die Identifizierung, Lokalisierung der Dienst-Kontrollfunktionen, Kontrolle und Leitung,
- Umsetzung von verschiedenen Medien, Konvertierung,
- Wegewahl (Routing) Kontrolle, bei einem Mobilfunksystem zwischen den Basisstationen BTS und den Transportnetzen,
- Gateway zu anderen Netzen

Der gesamte Kommunikationsverkehr eines Benutzers wird vor dem Transport durch die Kommunikationsnetze zur Bearbeitung automatisch zu der erfindungsgemäßen Vorrichtung geleitet (via local loop, lokale Vermittlungsstelle, LAN etc). Ein Kommunikationswunsch von einem herkömmlichen Telefon muß beispielsweise nicht mehr, wie bisher, zuerst über ein entsprechendes leitungsvermitteltes Netz zu einem passenden Gateway geleitet werden. Aufgrund dynamischer Kommunikationsparameter wird jetzt durch ein Bearbeitungsprogramm entschieden, wie der Kommunikationswunsch behandelt werden muß.

Die dynamischen Kommunikationsparameter können dabei umfassen:
- vom Sender gewünschte Dienstqualität (Signalisierung, Bandbreite, Transaktionsgeschwindigkeit)
- ausgewähltes Tarifsystem
- weitere vom Sender einstellbare Parameter (Kundenprofil, Geld, Zeit, Uhrzeit, Empfänger, Erreichbarkeit)
- Auslastungsoptimierung der Netze
- Kostenoptimierung über alle Kommunikationsnetze
- Anforderungen die sich aus den ausgewählten Telekommunikationsdiensten ergeben.

Sie werden mit dem Kommunikationswunsch mitgeliefert, sind in sogenannten Dienstprofilen gespeichert oder werden aus dem Netz ermittelt.

Die Aufgabe wird gelöst durch ein Verfahren gemäß Patentanspruch 4.

Der Kommunikationswunsch eines Kommunikationsgerätes wird empfangen. Ein für diesen Kommunikationswunsch geeignetes Bearbeitungsprogramm (abhängig von Absender- und Empfängerdaten, weiteren gespeicherten Parametern) wird als Inkarnation aufgerufen und durch dieses die Bearbeitung des Kommunikationswunsches gesteuert. Dadurch können auch mehrere gleichgeartete Kommunikationswünsche parallel und mit individuellen Parametereinstellungen bearbeitet werden.
Weitere Anweisungen, etwa zur Medien- oder Protokollkonvertierung, werden durchgeführt, und der Kommunikationswunsch entsprechend der getroffenen Wegewahlentscheidungen weitergeleitet. Die Wegewahlentscheidung betrifft sowohl die verschiedenen Netztypen, die Netzbetreiber auch in dem Fall, daß Netzelemente fehlerhaft funktionieren oder ausfallen, als auch die auf den Netzen zur Verfügung stehenden Diensttypen.

Die verschiedenen Kommunikationsdienste der heterogenen Netze werden so beim Aufruf, bei der Durchführung und bei der Terminierung kontrolliert und gesteuert. Basierend auf von von Diensten und Netzen zur Verfügung gestellten Parametern und weiteren kommunikationsrelevanten Parametern (Benutzeridentifikation, Dienstidentifikation, Leitungscharakteristika etc.), kann der Kommunikationsprozess automatisch an die spezifischen Netzcharakteristika, verwendeten Dienste und Medien und die betroffenen Itommunikationspartner eingestellt werden.

Weiterhin können mit dem vorgeschlagenen modularen System die Anforderungen optimal sowohl an bereits existierende Kommunikationsnetze als jederzeit auch an neueste Netztechniken angepaßt werden.

Wie die anderen Bestandteile des Bearbeitungsprogrammes soll auch für die Implementierung der Wegewahl-Logik eine Menge von vordefinierten Bearbeitungsanweisungen (SIB) definiert sein:
- Start (Initialisierung)
- Destination (Zieladresse wird aus Benutzerdaten ermittelt)
- Connect (Verbindung aufbauen)
- Release (Verbindung abbauen)
- Call (Initialisierung einer Rufes)
- Announcement (Ansage wird gespeichert)
- Prompt / Play (Ansage wird abgespielt)
- Select (Suche über Wegewahltabellen Information)
- Ctrop / Strop (arithmetische Funktionen)
- Compare (Spezialfall: Vote)
- Counter (Zähler)
- Timer (Zeitmesser)
- Ticket (Information über Verbindung wird generiert und versendet)
- Mailbox (Briefkastenfunktion)

Die verwendeten Bearbeitungsprogramme sind jeweils modular aus einzelnen Anweisungs-Bausteinen wie den gerade beschriebenen aufgebaut. Die Bearbeitungsprogramme können jederzeit neu entwickelt oder angepaßt werden.

Vorteilhafte Ausgestaltungen und Weiterbildungen sind in den Unteransprüchen angegeben.

Eine Entwicklungsumgebung, günstigenfalls ein graphischer Editor, wird zur Erstellung neuer Bearbeitungsprogramme verwendet. Eine Möglichkeit ist ein Java-fähiger Webbrowser, z. B. Netscape 4.5, mit AWT und Applet Viewer.

Oftmals ist eine Konvertierung eines Kommunikationswunsches erforderlich, der von einem bestimmten Medium über ein oder zu einem anderen Medium gesendet werden soll. Dies kann durch einen speziellen Konvertierungsdienst geschehen, wie dies in einem späteren Ausführungsbeispiel beschrieben ist. Es können aber auch häufig verwendete Konvertierungensmaßnahmen, wie Sprache zu Text, direkt in dem Verfahren enthalten sein, was Engpässe im Netz vermeidet und zeitsparend ist.

Weitergehende Statistikdaten, die die Kommunikation betreffen, aber keine direkten Auswirkungen auf die Bearbeitung der Kommunikationswünsche haben, können ebenfalls gesammelt, ausgewertet und weitergegeben werden. Der Datenstrom wird analysiert nach Informationen über die betroffenen Kommunikationswünsche, die dabei betroffenen Benutzer (in der Regel Anrufer und Angerufener), aber auch interne Statistiken über die aufgerufenen Bearbeitungsprogramme.
Weiterhin können Zustandsdaten betroffen sein, über den Status der Prozesse, der durchgeführten Kommunikationen und des allgemeinen Benutzungszustandes.
Diese Daten können darüber hinausgehend zum Beispiel auch für die Durchführung der Vergebührungen verwendet werden.
Es wird dadurch auch möglich, daß mehrere Netzzugangs- oder Dienstanbieter die Vorrichtung gemeinsam verwenden.

Eine Entwicklungsumgebung ermöglicht die flexible Generierung von Bearbeitungsprogrammen und Diensten.
Unterstützt werden die Verwendung von:
- Datenbanksysteme,
- verschiedene Treiber für Protokolle und Netze, insbesondere bereits existierende Standard Treiber,
- WWW Web Server Bedienoberflächen,
- Java Laufzeitumgebung,
- die Schnittstellen zu HLR und VLR bei den Mobilfunknetzen.

Flexibles Vergebühren der verschiedenen Netztypen, von Sprache und Daten, und unterschiedlicher Dienste wird lokal und global möglich.
Neue Dienste können auf der erfindungsgemäßen Vorrichtung generiert und eingerichtet werden: z. B. mit Java Programmierung, in einer 'Web'-Umgebung, also z. B. mit Hilfe von Web-Browsern und CGI Skripten.
Dienstadministration über Netze mit Administrationsschnittstellen, auch webbasiert, sowie die flexible Auswahl und Lokalisierung von Diensten und der Umgang mit Netzadressen sind möglich.

Zum Beispiel:
- Sprachkommunikation: Abbildung von Telefonnummern auf Netzadressen, Leitungsstatus bei paketvermittelten Netzen
- Videokommunikation: Datenkompression, Dienstqualität,...
- Datenkommunikation: Vergebührung von Diensten, Synchroner Datentransport.

Die Anwendungen sind vielfältig und reichen von verbesserten Telefondiensten, Kostenoptimierung, Automatisierung von Informationszugriffen und -weiterleitung bis zu erweiterten Multimedia-Diensten wie Video-Konferenzschaltungen oder die Unterhaltungsindustrie.

Im folgenden wird die Erfindung anhand von Ausführungsbeispielen erläutert. Dabei zeigen
- Figur 1: ein Schema der erfindungsgemäßen Vorrichtung,
- Figur 2: eine Möglichkeit, wie einheitliche Nachrichten aus heterogenen Netzen gesendet und empfangen werden (bekannt als ,Unified Messaging'),
- Figur 3: eine Verwendung der erfindungsgemäßen Vorrichtung in heterogener Netzumgebung,
- Figur 4: einen vereinfachten Aufbau eines Mobilfunknetzes,
- Figur 5: ein Mobilfunknetz, welches die erfindungsgemäße Vorrichtung zur Kommunikationsbearbeitung enthält, und
- Figur 6: ein weiteres konkretes Ausführungsbeispiel.

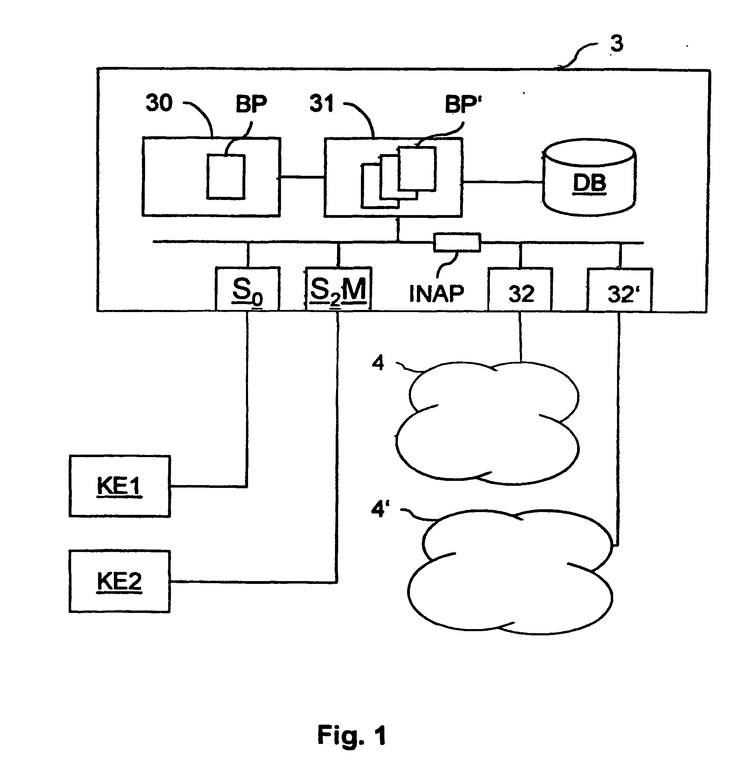

In Figur 1 ist ein Schema der erfindungsgemäßen Vorrichtung 3 aufgezeichnet. Sie bildet die Verbindung zwischen dem Kommunikationsgerät des Benutzers KE1, KE2, welches jede Art von Endgerät sein kann, aber auch z. B. eine private Vermittlungsstation oder ähnliches über die Schnittstellen S₀ und S₂M (z. B. ISDN Basis und Primary), und mindestens einem Kommunikationsnetz 4, 4'. Durch den modularen Aufbau der Vorrichtung ist es auch möglich, mehrere Zugänge zu verschiedenen Netzen parallel anzubieten 32, 32'.
Der Zugang 32 zu den Kommunikationsnetzen 4 wird z. B. realisiert durch sogenannte Steckkarten wie PC1/ISA Karten für ISDN, TCP/IP, zu Vermittlungsstellen wie die EWSD von Siemens, eine Vermittlungsstelle von Ericsson oder auch einer Voice-over-IP Karte.
Die Verbindung INAP zur Bearbeitungseinheit 31 kann durch ein Protokoll realisiert werden, zum Beispiel mit folgenden Befehlen des INAP Protokolls (ITU Q.1218):
- CallInformationReport (CIR)
- CallInformationRequest (CIQ)
- CollectInformation (CI)
- Connect (CON)
- ConnectToResource (CTR)
- EventReportBCSM (ERB)
- FurnishChargingInformation (FCI)
- InitialDP (IDP)
- PlayAnnouncement (PA)
- PromptAndCollect (PAC)
- ReleaseCall (RC)
- RequestReportBCSMEvent (RRB)
- SendChargingInformation (SCI)
- SpecializedResourceReport (SSR).
   Die Bearbeitungseinheit 31 enthält
- die Inkarnationen der Bearbeitungsprogramme
- Eine Administration und Parametrisierung der Bearbeitungsprogramme mit Hilfe von DB.
- Die eigentliche Steuerung, oder auch Laufzeitumgebung. Sie kann realisiert werden mit einem RM300, RM400 oder UNIX-Rechner (mit CD-Rom und anderen Zusatzgeräten) und weiterer optionaler Software wie einer Möglichkeit zum Speichern von Nachrichten und Konvertierungsprogrammen.

Eine (graphische) Programmieroberfläche 30, z. B. durch Java realisiert, kann ähnlich arbeiten wie Dienst-Erstellungs-Editoren für Dienste in Intelligente Netze, welche auf einer Graphischen Oberfläche einzelne feste Programmteile (SIBs) durch Verknüpfungen zu einem Dienste-Graph zusammenstellbar machen und anzeigen.

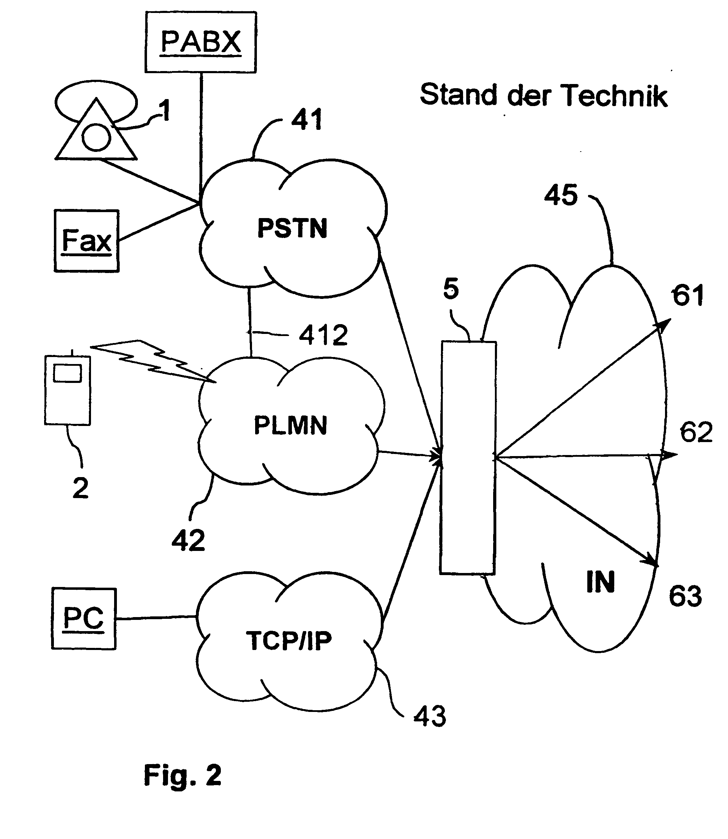

Das Dienstmerkmal, welches als ,Unified Messaging' bekannt ist, bietet den Dienstbenutzern einen einfachen Zugriff auf einen 'Anrufbeantworter' für viele verschiedene Arten von Nachrichten, wie Sprache, Fax, Elektronische Post (E-mail) usw.. In Figur 2 wird ein Aufbau skizziert, wie dieses Dienstmerkmal bereits realisiert wird.
Verschiedenste Arten von Endgeräten, wie Festnetz-Telefon 1, Nebenstellenanlage PABX, Faxgerät Fax, Mobiltelefon 2 oder Computer PC mit verschiedenen Arten von Nachrichten, Audio, Video, Text, Sprache etc. sind über ihre verschiedenen Zugriffsnetze wie das leitungsvermittelte Telefonnetz (PSTN) 41, Mobiltelefonnetz (PLMN) 42 oder ein paketvermittelndes Datennetz (TCP/IP) 43 mit einem Briefkasten (Mailbox) 5 in einem weiteren Netz 45 verbunden.
Nachrichten zwischen den einzelnen Endgeräten können so auch über einzelne proprietäre Verbindungen 412 zwischen den Zugangsnetzen versendet werden.

Es wird dem Benutzer eine einheitliche Oberfläche angeboten, unabhängig von dem von ihm benutzten Medium. Wenn das angewählte Faxgerät gerade belegt ist, oder ein Telefonanruf nicht beantwortet wird, so nimmt die Mailbox den Kommunikationswunsch an und speichert eine Nachricht oder das eintreffende Fax ab. Der Empfänger der Nachricht kann diese zu einem späteren Zeitpunkt in beliebiger Form 61, 62, 63 abholen.

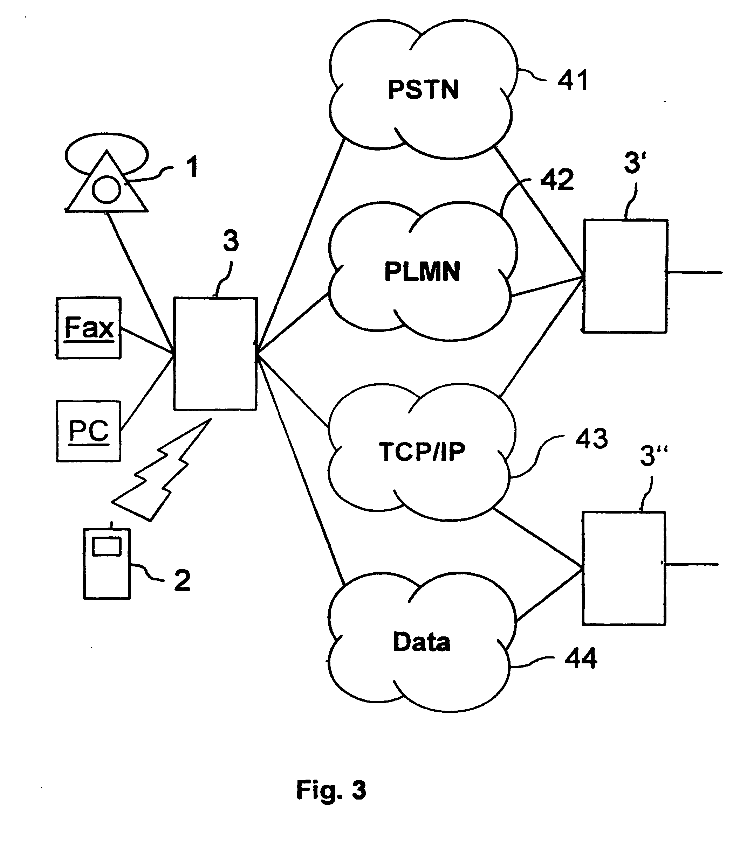

Figur 3 zeigt ein erfindungsgemäßes System. Verschiedene Kommunikationsnetze 41, 42, 43, 44 verwenden verschiedene Vermittlungs- und Übertragungstechniken. Leitungsvermittelte Netze wie das Telefon-Festnetz PSTN und Mobilnetz PLMN und Paketvermittelte Netze wie TCP/IP und Data sollen mit verschiedenen Arten von Kommunikationsgeräten benutzbar sein.
Dazu gehören herkömmliche Telefon- 1 und Faxgeräte 2 zur Sprach- und Datenübertragung, sowie neue Datenverarbeitungsgeräte PC. Bei Mobilfunkgeräten 2 kann sich die erfindungsgemäße Vorrichtung 3 vor der Basisstation, zwischen Basisstation und Basisstation Steuerung oder vor der Mobilvermittlungsstelle befinden.
Weitere Netzzugänge 3' und 3 " existieren. Soll eine Nachricht zum Beispiel von Telefon 1 an ein weiteres Telefon gesendet werden, welches über 3' erreichbar ist, so kann der Weg über das herkömmliche Telefonnetz PSTN 41 gewählt werden oder mit der neueren Technologie "Voice over IP" wird die Nachricht konvertiert und über das paketvermittelnde TCP/IP Netz gesendet.

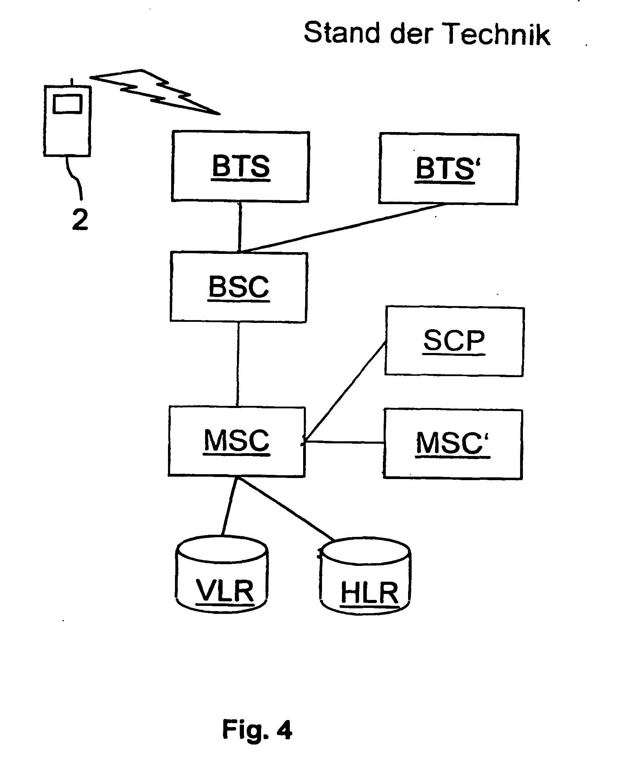

In Figur 4 wird ein Mobiles Telekommunikationsnetz oder Mobilfunknetz dargestellt, wie es bereits bekannt ist. Die "Intelligenz" dieses Netzes sitzt dabei in den Mobil-Vermittlungsstellen MSC, MSC', bei welchen es sich zum Beispiel um digitale Vermittlungsstellen handelt, die für die speziellen Bedürfnisse der Mobilkommunikation angepaßt wurden.
Die Schnittstellen bei der Mobilkommunikation (z. B. die Luftschnittstelle) sind durch Standardisierungsgremien festgelegt (z. B. CDMA, TD-CDMA von ETSI für Übertragungen mit hohem Volumen von Sprache, Daten, Text, Video und Multimedia). Die Einführung neuer Standards zieht hohe Investitionen in Form von neuer Infrastruktur nach sich, sowie eine Vielfalt neuer technischer Probleme, die bei der Neuinstallation dieser Infrastruktur auftreten.

Eine Übertragung von Kommunikationswünschen in einem Mobilfunknetz wird derzeit durch proprietäre Hardware und Software realisiert. Die Unterstützung neuer Protokolle oder Dienste / Dienstmerkmale müssen mit den bereits vorhandenen und betroffenen Komponenten des Mobilfunknetzes synchronisiert werden. Die derzeit verwendeten Technologien mit Schmalbandvermittlungssystemen und Übertragungswerten von 9,6 kb/s bis 64 kb/s wird für zukünftige Anwendungen nicht ausreichend sein. Heutige Erweiterungen werden durch die Anbindung von HLR-Zugriff oder Intelligente Netze über Signalisierungsleitungen gelöst. Diese Lösungen sind sehr zeit- und kostenintensiv, zudem erzeugt es eine sehr starke Bindung an den Geratehersteller.

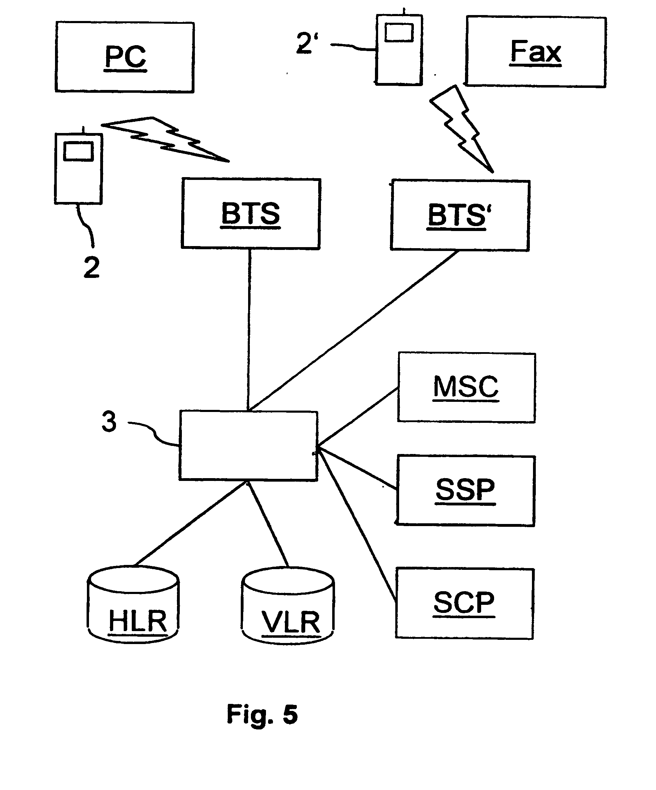

In Figur 5 wird eine erfindungsgemäße Lösung für ein mobiles Telekommunikationsnetz gemäß Figur 4 dargestellt.
Die erfindungsgemäße Vorrichtung 3 ersetzt zunächst die bekannte Mobil-Vermittlungsstelle MSC, indem die Basisstation Steuerung BSC mit moderner Datenverarbeitungs-Technologie erweitert wird.
Die Vorrichtung 3 ermöglicht die Einführung neuer Standards bei bestehender Infrastruktur. Sie ist während aller Kommunikations-Aufrufe von oder zu den mobilen Endgeräten 2, 2`, PC, Fax beteiligt.
Dadurch werden Vorteile für die Dienstbereitstellung, der Freiheit in der Benutzung verschiedener Übertragungsprotokolle und Standards, die Anpassung an neue Funktionalitäten und Dienste sowie z. B. ein direkter Zugriff zum Internet ermöglicht.

Basierend auf Parametern, die das Transportnetz oder die Dienste charakterisieren oder weitere kommunikationsrelevanter Parameter wie einem Benutzerprofil, einem Diensteprofil, Leitungscharakteristiken, Endgerätecharakteristiken etc. wird der Kommunikationsprozeß durch die flexiblen erweiterbaren Bearbeitungsprogramme gesteuert, die den speziellen Gegebenheiten von Netz, Diensten, Medien und Kommunikationspartnern angepaßt sind.

Die Vorrichtung kann auf Basis eines standardisierten offenen Computersystems realisiert werden, beispielsweise auf Grund der X/Open (The Open Group, http://www.opengroup.org) Spezifikationen bezüglich offener Systeme. Standard Computer Hardware unterstützt die Verwendung von Einsteckkarten für verschiedene Leitungstypen und Protokollbedürfnisse mit den Schnittstellen zu LAN, TCP/IP, X.25, SS7, TDMA und die dazugehörigen Treiber.

Ein Rückzugs- ("Fallback") Mechanismus kann eine Mindestqualität der Dienstqualität (zum Beispiel für Sprachübertragung) sichern: eine reguläre Schnittstellenkarte mit voreingestellten Werten und der Möglichkeit ausgestattet, alle weiteren definierten Regeln bei Bedarf zu umgehen.

Weitere Vorteile sind:
- die immer weiter zunehmende Datenmenge, die über das mobile Telekommunikationsnetz transportiert werden muß, benötigt eine optimale Auswahl der Übertragungsmedien und - kanäle,
- die Vielzahl unterschiedlicher Endgeräte und Medien, welche an das mobile Netz angeschlossen werden, benötigen flexible Controller Schnittstellen zwischen der Basisstation BTS und dem Mobilnetz ("backbone"). In manchen Fällen (z. B. Video Interaktion) müssen korrespondierende Einheiten direkt adressiert werden, um Bandbreite optimal ausnutzen zu können.
- Die rasche und verteilte Einführung von neuen Protokollen und Medien-Konversionen, Kompressionsverfahren und Transportmechanismen wird durch eine flexible, programmierbare Komponente basierend auf offenen Standards ermöglicht. Damit wird auch die Schnittstelle zu bestehenden Netzen und Netzelementen wie die Mobilvermittlungsstelle (MSC) geschaffen, sowie die Flexibilität für die Einführung neuer Netzelemente zur Ausnutzung neuer effizienterer Transportmittel.
- Die Wahl zwischen lokalen und globalen Diensten und der flexible Wechsel verlangt die Verwendung von preisgünstigen aber hoch-flexiblen Geräten, insbesondere Standard Netzelemente. Eine Personalisierung der Dienste soll möglich sein, zum Beispiel in Form von Benutzerprofilen.
- Der Anschluß an das Internet oder andere derartig ausgeformte Netze wird möglich, ohne daß der Datenverkehr durch die Mobilvermittlungsstelle MSC geleitet wird, mit den damit verbundenen Nachteilen wie Dienstebeschränkungen oder Kapazitätsverlusten bei der Vermittlungsstelle. Ein konventioneller MSC unterstützt nur das Wegewahlverfahren der geringsten Kosten (least cost routing).
- Durch die Integrationsfähigkeit von Geräten verschiedener Hersteller wird auch die Verwendung mehrerer alternativer Träger (Carrier) unterstützt.
- Durch die geeignete Programmierung der erfindungsgemäßen Vorrichtung ist es z. B. auch möglich, DECT Geräte und Anwendungen durch Einstecken von Standard DECT Schnittstellenkarten hinzuzufügen.

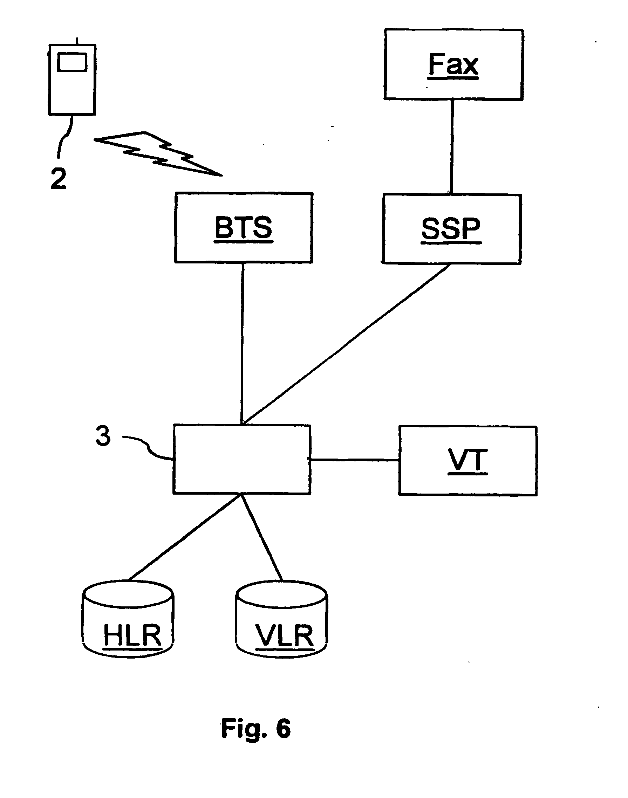

Figur 6 zeigt ein typisches Beispiel, wie die erfindungsgemäße Vorrichtung vorteilhaft eingesetzt werden kann.
Ein Mobilfunkteilnehmer 2 versucht, einen Kommunikationspartner Fax zu erreichen. Über die Basisstation BTS wird der Kommunikationswunsch an eine erfindungsgemäße Vorrichtung 3 übermittelt. Aus den Datenbanken HLR oder VLR oder auch weiteren Datenbanken in der Vorrichtung 3 oder im Netz (nicht dargestellt) kann der Kommunikationspartner aufgrund der voreingestellten Regeln und Parameter herausgefunden werden. In diesem Fall stellt sich jedoch heraus, daß es sich bei der Adresse / Nummer um die eines Faxgerätes Fax handelt. Weiterhin wird ermittelt, daß der Gesprächspartner einen Übersetzungsdienst VT beantragt hat, um gesprochene Nachrichten in schriftlicher Umsetzung auf seinem Faxgerät Fax empfangen zu können.
(Alternativ könnte der gesprochene Text auch in ASCII übertragen werden, welches dann wiederum an Fax oder auch als Email an einen PC oder als Kurznachricht (SMS, Short Message Service) an ein mobiles Endgerät gesendet werden können.)
Um zusätzlich eine preisgünstige Übertragung zu ermöglichen, und da ein synchroner Transfer nicht notwendig ist, wird die Sprachnachricht in Datenpaketen zum Übersetzungsdienst VT gesendet. Nach Empfang der konvertierten Daten legt das Wegewahlverfahren für die Übertragung zum Endgerät des Kommunikationspartners als günstigen Weg denjenigen über den Vermittlungsknoten SSP fest, da in dem dargestellten Fall nur diese eine Möglichkeit besteht.

### Abkürzungsverzeichnis

- ASCII: American Standard Code for Information Interchange
- APEX: advanced processor extension
- ATM: Asynchronous Transfer Mode
- AWT: Abstract Windows Toolkit
- BSC: Base Station Controller (Basisstation Steuerung)
- BTS: Base Transmitter Station (Basisstation)
- CDMA: Code Division Multiple Access
- CGI: Common Gateway Interface
- Data: Datennetz, paketvermittelndes Netz
- DB: Datenbank
- ETSI: European Telecommunications Standards Instituts; Europäisches Institut für Telekommunikationsnormen
- EWSD: Elektronisches Wählsystem Digital
- Fax: Faxgerät
- HLR: Home Location Register (Heimatregister)
- IETF: Internet Engineering Task Force
- INAP: Intelligent Network Application Part
- ISA: Industrial Standard Architecture
- ITU: International Telecommunication Union
- KE: Kommunikationsendgerät
- LAN: Local Area Network
- MSC: Mobile Switching Center (Mobilvermittlungsstelle)
- PABX: Private Branch Exchange (Private Nebenstellenanlage)
- PC: Personal Computer, Datenverarbeitungsgerät
- PCI: Peripheral Component Interconnect (von Intel)
- PLMN: Public Land Mobile Network (Mobiltelefonnetz)
- PSTN: Public Switched Telephone Network (Festnetz, Leitungsvermitteltes Netz)
- RFC: Request for Comment
- SCP: Service Control Point (Dienstezentrale)
- SIB: Service Independent Building Block
- SS.7: Zentralkanalsignalisierungssystem Nr. 7
- SSP: Service Switching Point (IN fähige Vermittlungsstelle)
- TCP/IF: Transmission Control Protocol / internet Protocol
- TDMA: Time Division Multiple Access
- VLR: Visitor Location Register (Besucherregister)
- VT: Voice Translator (Sprachübersetzer)
- X.25: Festlegung der Schnittstelle zwischen Datenendeinrichtung (DEE) und Datenübertragungseinrichtung (DÜE) für Endeinrichtungen, die im Paketmodus in öffentlichen Datennetzen arbeiten

## Patentansprüche

1. Datenverarbeitungssystem (3) zur Bearbeitung von Kommunikationswünschen, bestehend aus
- mindestens einem auswechselbaren ersten Schnittstellenmodul (S₀, S₂M) zu einem Kommunikationsgerät (KE1, KE2), und
- mindestens einem auswechselbaren, von dem ersten Schnittstellenmodul unabhängigen, zweiten Schnittstellenmodul (32, 32') zu einem Kommunikationsnetz (4, 4'), und
- einer Bearbeitungseinheit (31), welche mindestens ein änderbares Bearbeitungsprogramm (BP') enthält, das modular aufgebaut ist und an die Art der angeschlossenen Kommunikationsgeräte (KE1, KE2) und Kommunikationsnetze (4, 4') und die Schnittstellenmodule (S₀, S₂M) zu dem Kommunikationsnetzen angepaßt ist, und
- eine Speichereinheit (DB), in der zur Ausführung der Bearbeitungsanweisung benötigte Kommunikationsparameter gespeichert sind oder von der diese ermittelt werden und diese dann an die Bearbeitungseinheit übergeben werden
**dadurch gekennzeichnet, dass**
die Schnittstellenmodule (S₀, S₂M, 32, 32') und Bearbeitungs- und Speichereinheiten (31, DB) über ein Bussystem miteinander verbunden sind und derart ausgestaltet sind, daβ ein über eines der ersten Schnittstellenmodule (S₀, S₂M) empfangener Kommunikationswunsch bearbeitet wird, und dann über das Bussystem zu einem zweiten Schnittstellenmodul und von dort in ein geeignetes Kommunikationsnetz an den Empfänger weitergeleitet wird.

2. Vorrichtung nach Patentanspruch 1
**dadurch gekennzeichnet, dass**
sie eine Entwicklungsumgebung (30) enthält, zur Neuerstellung und Änderung von Bearbeitungsprogrammen (BP), welche aus vordefinierten Bearbeitungsanweisungen bestehen.

3. Vorrichtung nach Patentanspruch 1 oder 2
**dadurch gekennzeichnet, dass**
ein Umwandler enthalten ist oder angesprochen werden kann, der unterschiedliche Übertragungsformen und/oder-Protokolle konvertieren kann.

4. Verfahren zur Bearbeitung von Kommunikationswünschen in heterogenen Kommunikationsnetzen (PSTN, PLMN, TCP/IP, Data),
bestehend aus folgenden Schritten:
- ein Kommunikationswunsch von einem Kommunikationsendgerät (KE1, KE2) wird an einem ersten Schnittstellenmodul empfangen und über ein Bussystem an eine Bearbeitungseinheit weitergeleitet, und
- aufgrund von empfangenen und ermittelten dienstrelevanten oder teilnehmerindividuellen Informationen zu diesem Kommunikationswunsch wird eine Inkarnation (BP') eines geeigneten Bearbeitungsprogramms aufgerufen, welches modular entworfen und aufgebaut ist, und sofern dies notwendig ist, wird in der Bearbeitungseinheit eine Konvertierung des Kommunikationswunsches durchgeführt, so dass
- unabhängig von der Art des eingehenden Kommunikationswunsches" (1, 2, Fax, PC) und abhängig von der Art der gewählten Kommunikationsdienste der konvertierte Kommunikationswunsch über das Bussystem zu einem zweiten Schnittstellenmodul und von dort in ein geeignetes Kommunikationsnetz an den Empfänger weitergeleitet wird.

5. Verfahren nach Patentanspruch 4,
**dadurch gekennzeichnet, dass**
die mit dem Kommunikationswunsch mitgelieferten und die ermittelten Informationen (DB) Telekommunikationsdienste betreffen, welche zur weiteren Bearbeitung des Kommunikationswunsches geeignet sind.

6. Verfahren nach Patentanspruch 4 oder 5,
**dadurch gekennzeichnet, dass**
das Wegewahlverfahren einen Weg mit minimalen Übertragungskosten auswählt.

7. Verfahren nach Patentanspruch 4, 5 oder 6,
**dadurch gekennzeichnet, dass**
von dem Bearbeitungsprozess Statistikdaten über die bearbeiteten Kommunikationsdaten gesammelt werden.

8. Verfahren zur Bearbeitung von Kommunikationswünschen gemäß Anspruch 4, bei dem, basierend auf von den Kommunikationsnetzen bereitgestellten und weiteren dienstrelevanten Parametern sowie teilnehmerindividuellen kommunikationsrelevanten Parametern (DB), und abhängig von den in der Kommunikation beteiligen Kommunikationspartnern (KE1, KE2)
- ein verwendeter Dienst ausgewählt wird, und
- unabhängig von dem Kommunikationstyp und den angeforderten Diensten eine Wegewahlentscheidung getroffen wird, und
- die teilnehmerindividuelle Bearbeitung des Kommunikationswunsches und Ausführung angeforderter Dienste automatisch nach eingebbaren, modular aufgebauten Regeln geschieht und
- eine Protokoll- und/oder Medien-Konvertierung erfolgt, sofern der Bedarf dafür festgestellt wurde, und
- dieser Kommunikationswunsch dann entsprechend der getroffenen Wegewahlentscheidung weitergeleitet wird.

## Claims

1. A data processing system. (3) for processing communication requests, comprising:
- at least one interchangeable first interface module (S₀, S₂M) for connecting with a communication device (KE1, KE2), and
- at least one interchangeable second interface module (32, 32') for connecting with a communications network (4, 4'), and
- a processing unit (31) containing at least one modifiable processing program (BP') having a modular configuration and adapted in regards to the communication device (KE1, KE2), the communications network (4, 4'), and said first interface module (S₀, S₂M), and
- a storage unit (DB) for storing communication parameters needed for executing processing instructions, said storage unit connected to said processing unit for transferring said communication parameters to said processing unit,
**characterized in** such a way that
the interface modules (S0, S2M, 32, 32') and the processing and storage units (31, DB) are connected via a bus system and are constructed such that a communication request received via one of the first interface modules (S0, S2M) is processed, and then is forwarded via the said bus system to a said second interface module and from there it is forwarded to an applicable communication network to the receiving party.

2. The device according to claim 1, **characterized by**
the inclusion of a program development environment (30) for creating and modifying said processing program (BP) formed from the processing instructions.

3. The device according to claim 1 or 2, **characterized by**
the inclusion of a converter or the possibility of it being used capable of converting different, forms and protocols of transmissions

4. A method for processing communication requests in heterogeneous communication networks (PSTN, PLMN, TCP/IP, Data), which comprises of the following steps:
- a communication request from a communication end device (KE1, KE2) is received by a first interface module and is forwarded to a processing unit via a bus system, and
- an incarnation of a suitable processing program is getting executed for processing requested services on the basis of received and determined service-relevant or subscriber individual information relating to the communication request,
- where the said processing program has a modular design and configuration and
- which, if necessary, performs a conversion of the communication request in the processing unit,
- such that, independent of the kind of the incoming communication request (1, 2, Fax, PC) and dependent on the kind of the selected communication service, the converted communication request is forwarded to a second interface module' via the bus system, and from there it is forwarded to an applicable communication network to the receiver.

5. The method according to claim 4 **characterized by**
the fact that the information (DB) which have been received and determined by the communication request, relate to telecommunication services which are suitable for further processing of the said communication request.

6. The method according to claim 4 or 5 **characterized by**
selecting a least costly route as the route.

7. The method according to claim 4, 5, or 6 **characterized by**
collecting statistical data on communication data processed.

8. A communication services system for heterogeneous communication networks, which on a basis of parameters provided by the communication networks, other service-related parameters, subscriber-oriented communication-related parameters (DB) and in dependence on user communication devices (KE1, KE2) involved
- selects a service to be used,;
- makes a routing decision independently of a type of communication and requested services;
- carries out automatically subscriber-oriented processing of a communication request and execution of the requested services in accordance with modularly configured rules which can be input;
- performs one of a protocol conversion and a media conversion if a demand for this has been found; and
- forwards the communication request in accordance with a routing decision made.

## Revendications

1. Systèmes d'exploitation des données (3) pour le traitement des demandes de communication, sont constitués de
- au minimum, une première unité d'interface échangeable (S₀, S₂M) branché avec un appareil de communication (KE1, KE2), et
- au minimum, une seconde unité d'interface échangeable (32, 32') et indépendante de la première unité d'interface et branché avec un réseau de communication (4, 4'), et
- une unité de traitement (31), laquelle comporte au minimum un logiciel variable (BP'), et qui est structuré de façon modulaire et qui est adapté au raccordement des appareils de communication (KE1, KE2) et des réseaux de communication (4, 4') et des unités d'interface (S₀, S₂M) adaptées aux réseaux de communication, et une unité de mémoire (DB), dans laquelle sont stockés les paramètres de communication nécessaires pour réaliser les instructions de traitement ou de laquelle on peut déduire telles Instructions et les transmettre à l'unité de traitement, sont marqués de manière que les unités d'interface (S₀, S₂M, 32, 32') et les unités de traitement et de mémoire (31, DB) sont branchées à travers un système bus et sont configurées de manière qu'une demande de communication réceptionnée à travers la première unité d'interface (S₀, S₂M) puisse être traitée à travers la seconde unité d'interface et après transmise vers un réseau de communication adéquat et transmise vers le destinataire.

2. Dispositif selon exigence de brevet 1
**Caractérisée par** la présence d'un milieu de développement (30), visant de création et de modification des logiciels (BP), lesquels consistent en instructions de traitement prédéfinis.

3. Dispositif selon exigences de brevet 1 ou 2
**Caractérisées par** la présence de ou l'accès à un convertisseur capable de convertir diverses méthodes et/ou systèmes de signalisation.

4. Procédure de traitement des demandes de communication dans des réseaux de communication hétérogène (PSTN, PLMN, TCP/IP, données) consistent en mesures suivantes :
- une demande de communication provenant d'un appareil d'émission de communication (KE1, KE2) peut être réceptionnée par une première unité d'interface et peut être transmise avec un système bus à l'unité de traitement, et
- basé sur des informations réceptionnées et les caractéristiques de service ou d'abonné de cette demande de communication une incarnation (BP') d'un logiciel de traitement (BP) sera chargée avec la réalisation d'un tel service,
- laquelle est conçue et construite de façon modulaire, et
- dans la mesure où c'est nécessaire, l'unité de traitement réalisera la conversion de la demande de communication, suite et indépendante de la façon de la demande de communication réceptionnée (1,2,Fax, PC) et indépendant de la façon du service de communication choisi par la demande de communication converti à travers le system bus en direction d'une seconde unité d'interface et de là à un réseau adéquat, et transmise vers le destinataire.

5. Procédure selon exigence de brevet 4,
**Caractérisée par** la façon des informations transmises avec la demande de communication et par la façon des informations déduites (DB) concernant les services de télécommunication, qui sont susceptibles aux traitements suivants de la demande de communication.

6. Procédure selon exigences de brevet 4 ou 5,
**Caractérisée par** le système de sélection de voie qui va sélectionner la voie visant des coups minimaux de transmission.

7. Procédure selon exigences de brevet 4, 5 ou 6,
**Caractérisée par** la façon du processus de traitement sera collecter des informations statistiques sur les données de communication traitées.

8. Système des services de communication applicable aux réseaux de communication hétérogènes, basé sur les autres importants paramètres de service proposés importants au service et par les réseaux de communication et aussi les paramètres proposés par les abonnés individuels valables pour la communication **(DB)**, et dépendant des artenaires de communication **(KE1**, **KE2**) participants en communication
- un service employé sera choisi, et
- indépendant du type de communication et des services demandés sera décidé la sélection de voie, et
- le traitement de demande de communication par abonné individuel et la réalisation des services demandés sera automatiquement se passer selon les règles structurées modulaires incorporées, et
- un système de signalisation et/ou conversion de media prendra place selon le besoin constaté, et
- que cette demande de communication sera transmise selon la sélection de voie!
